# EUROPEAN PATENT APPLICATION

(11) **EP 4 640 490 A1**
(43) Date of publication of application: **29.10.2025**
(21) Application number: 24382460.4
(22) Date of filing: 25.04.2024
(51) Int. Cl.: B60R 9/06, B62D 63/06

(54) **SUPPORT STRUCTURES FOR LOAD CARRIERS OF TOWING VEHICLES**

(71) Applicant: Enganches y Remolques Aragón, S.L., 50016 Zaragoza (ES)
(72) Inventor: BENITO MONREAL, Fernando, 50057 ZARAGOZA (ES)
(74) Representative: ZBM Patents - Zea, Barlocci & Markvardsen

(57) **Abstract**

In a first aspect, a support structure for a load carrier of a towing vehicle is provided. The support structure comprises a coupling device couplable with a tow bar; a fixed arm fixedly connected to the coupling device; and a movable arm pivotably connected to the fixed arm. The movable arm is configured to support the load carrier to pivotably move the load carrier relative to the fixed arm. The support structure further comprises a wheel assembly having a wheel support pivotally connected to the movable arm and a wheel. The wheel assembly is configured to pivot between: a supporting position to rest the wheel on the ground; and a hidden position to prevent the wheel from contacting the ground. In a further aspect, a load carrier assembly comprising a load carrier supported by the support structure is provided.

## Description

The present disclosure relates to support structures for a load carrier of a towing vehicle and load carrier assemblies for a towing vehicle having the load carrier and the support structure.

### BACKGROUND

Tow bars or tow hitches are devices commonly used for connecting a towing vehicle or a tractor vehicle to a trailer or to a load carrier. The towing vehicle may thus pull the trailer and support the load carrier. Tow bars or hitches may be mounted on the rear part of towing vehicles, e.g. in the area of the rear bumper of a car or a truck, for hooking a load carrier.

Load carriers are equipment for carrying different objects on a tow bar of a towing vehicle. When the towing vehicle is travelling, load carriers are only supported by the tow bar. Accordingly, no wheels of the load carrier contact the road when the towing vehicle moves. Therefore, load carriers need to be firmly attached to the vehicle. For connecting a load carrier to a vehicle, tow bars or hitches generally have the form of a tow ball which allows a coupling device of the load carrier to clamp it and thus establishing a mechanical connection between the towing vehicle and the load carrier.

Load carriers are generally configured to carry objects such as sports equipment, e.g. bicycles or skis or luggage. Storage boxes may also be examples of load carriers designed to carry luggage or camping equipment. Load carriers thus significantly increase the carrying capacity of the towing vehicle.

When the towing vehicle is parked, the load carrier coupled with the towing bar may obstruct the access to the trunk of the towing vehicle. Storage boxes mounted on the tow bar may block the aperture of the trunk lid; in particular, with large trunk lids, such as in camper vans.

To access the trunk of the towing vehicle, the user must thus disconnect the loading carrier from the tow bar. This may be cumbersome, especially, if the loading carrier must be often mounted and demounted from the tow bar, e.g. in camper van road trips. Furthermore, loads may need to be removed from the load carrier before being demounting from the tow bar.

The present disclosure provides examples of systems and methods that at least partially resolve some of the aforementioned disadvantages.

### SUMMARY

In a first aspect, a support structure for a load carrier of a towing vehicle is provided.

The support structure comprises a coupling device couplable with a tow bar of the towing vehicle and a fixed arm fixedly connected to the coupling device. The tow bar may comprise a tow ball. The coupling device may be secured on the tow ball. The coupling device may comprise a pair of clamping jaws to engage the tow bar.

The support structure further comprises a movable arm pivotably connected to the fixed arm, wherein the movable arm is configured to support the load carrier to pivotably move the load carrier relative to the fixed arm. In addition, the support structure comprises a wheel assembly. The wheel assembly comprises a wheel support pivotally connected to the movable arm to pivot the wheel support about the movable arm. The wheel assembly also comprises a wheel rotatably connected to the wheel support. Furthermore, the wheel assembly is configured to pivot between a supporting position to rest the wheel on the ground; and a hidden position to prevent the wheel from contacting the floor.

According to this aspect, the movable arm may be swung away from the fixed arm while the support structure is mounted on the tow bar. Accordingly, the load carrier supported by the movable arm may be swung away from the rear part of the towing vehicle while the coupling device is coupled with the tow bar of the towing vehicle. Consequently, the trunk of the towing vehicle may be accessed without removing the support structure that supports the load carrier from the tow bar. For example, trunk lids of camper vans may be accessed when the movable arm pivots outwards relative to the fixed arm.

The wheel assembly may pivot or rotate between the hidden position and the supporting position. The wheel assembly may thus be easily positioned between the hidden position when the towing vehicle travels and the supporting position when the towing vehicle is parked. The towing vehicle travels when the wheel assembly is at the hidden position. The wheel assembly at the hidden position is away from the ground.

The wheel support is substantially parallel to the movable arm when the wheel assembly is at the hidden position. Accordingly, the towing car experiences a less frictional force and the support structure may adopt a more compact shape. Furthermore, as the wheel assembly is away from the ground, a free space is left between the support structure and the ground. The wheel is thus prevented from contacting the ground, even on uneven roads or grounds. The load carrier is thus exclusively supported from the tow bar when the towing car travels.

On the other hand, the wheel rests on the ground when the wheel assembly is at the supporting position. When the wheel assembly is at the supporting position, the support structure is supported by the tow bar, but also by the wheel that rests on the ground. The wheel support is substantially perpendicular to the movable arm when the wheel assembly is at the supporting position. The wheel may thus roll on the ground. This may help to move the movable arm relative to the fixed arm. Furthermore, as the supporting structure (and the load carrier) is supported by the tow bar and by the wheel, the support structure may be lighter. Furthermore, the load capacity of the load carrier may be increased.

Accordingly, the support structure of the present disclosure allows the trunk to be accessed while the load carrier is mounted on the tow bar in a simple and easy manner.

In some examples, the wheel support is extendable. The distance between the wheel and the movable arm, when the wheel assembly is at the supporting position, may thus be adjusted. The wheel assembly may thus be adjusted to the distance between the support structure and the ground. Accordingly, the support structure, and consequently the load carrier, may be adapted to different types of towing vehicles and/or to the irregularities of the ground.

The wheel assembly may comprise a wheel locking pin to prevent the wheel support from pivoting about the movable arm. A handle may be attached to the wheel locking ping to manually release the locking pin so as to allow the movement of the wheel support relative to the movable arm.

In some examples, the movable arm is configured to pivotally move relative between a closed position and an open position. The movable arm (and consequently the load carrier) is close to the tow bar when the movable arm is at the closed position, whereas it is away from the tow bar when the movable arm is at the open position.

The movable arm may rotate 180° between the closed position and the open position. The load carrier (when mounted on the movable arm) may thus be positioned away from the trunk of the towing vehicle. The trunk of the towing vehicle may thus be easily accessed. Due to this rotational angle, the load carrier may be positioned at a lateral side of the towing vehicle.

In some examples, the support structure may comprise a wheel assembly - fixed arm locking assembly to lock the movable arm at the closed position relative to the fixed arm when the wheel assembly is at the hidden position. The movable arm is thus prevented from moving to the open position when the wheel assembly is at the hidden position. Accordingly, the movable arm cannot be moved until the wheel assembly adopts the supporting position. This may enhance the safety of the movement of the movable arm (and of the load carrier).

Alternatively, or additionally, the support structure comprises a movable arm - fixed arm locking assembly to lock the movable arm relative to the fixed arm at the closed position. The movable arm - fixed arm locking assembly may thus prevent the rotation of the movable arm about the fixed arm. The movable arm is thus retained close to the fixed arm, and consequently, to the tow bar. Unintentionally outwards rotations of the movable arm are thus prevented. Safety when the towing car travels is thus enhanced.

In some examples, the support structure comprises a warning system to indicate that the wheel assembly is at the supporting position. This warning system may thus warn the user that the wheel is contacting the ground so as to prevent the towing car from moving. Damages on the wheel are thus prevented.

As explained above, the load carrier may be supported by the movable arm. A pair of supporting brackets rigidly connected to the movable arm may be used to be attached to the load carrier. These supporting brackets may extend substantially perpendicular to the movable arm. The load carrier, e.g. a storage box, may be attached to the movable arm stably and securely.

In a second aspect, a load carrier assembly for a towing vehicle is provided. The load carrier assembly comprises a load carrier for carrying a load and a support structure connected to the load carrier. The support structure may be according to any of the examples herein.

Advantages derived from this aspect may be similar to those mentioned regarding the first aspect.

The load carrier may be attached to the movable arm. The load carrier may thus be moved together with the movable arm. For example, the load carrier may be attached, e.g. screwed to the pair of supporting brackets of the movable arm.

In some examples, the load carrier may be a storage box. The storage box may be employed for transporting luggage or camping equipment. The storage box may comprise a body and a lid to close the body. Equipment stored in the storage box may thus be protected from the weather.

### BRIEF DESCRIPTION OF THE DRAWINGS

Non-limiting examples of the present disclosure will be described in the following, with reference to the appended drawings, in which:
Figures 1A and 1B show isometric views of a load carrier assembly according to an example of the present disclosure;
Figures 2A and 2B respectively show a top and a front view of a load carrier assembly coupled with a tow bar of a towing vehicle according to an example of the present disclosure;
Figures 3A and 3B respectively show an isometric and a top view of a support structure with the wheel assembly in the hidden position according to an example of the present disclosure;
Figures 4A and 4B respectively show an isometric and a top view of the support structure of Figures 3A and 3B with the wheel assembly in the supporting position;
Figure 5 illustrates a wheel assembly according to an example of the present disclosure;
Figures 6A and 6Brespectively show an isometric view, seen from below, of a load carrier assembly with the wheel assembly at the hidden position and at the supporting position according to an example of the present disclosure;
Figures 7A - 7B are zoomed-in view of the wheel assembly and of a wheel assembly - fixed arm locking system of Figures 6A - 6B when the wheel assembly is respectively at the hidden position and at the supporting position;
Figures 8A - 8B are zoomed-in views of the warning system of Figures 6A - 6B when the wheel assembly is respectively at the hidden position and at the supporting position;
Figures 9A - 9B are respectively zoomed-in views of the movable arm - fixed arm locking assembly of Figures 6A - 6B at the engaging position and at the disengaging position;
Figure 10 illustrates a load carrier according to an example of the present disclosure; and
Figure 11A illustrates a camper equipment according to an example of the present disclosure and Figure 11B illustrates the camper equipment of Figure 11A arranged inside the load carrier of Figure 10.

### DETAILED DESCRIPTION OF EXAMPLES

In these Figures, the same reference signs have been used to designate matching elements.

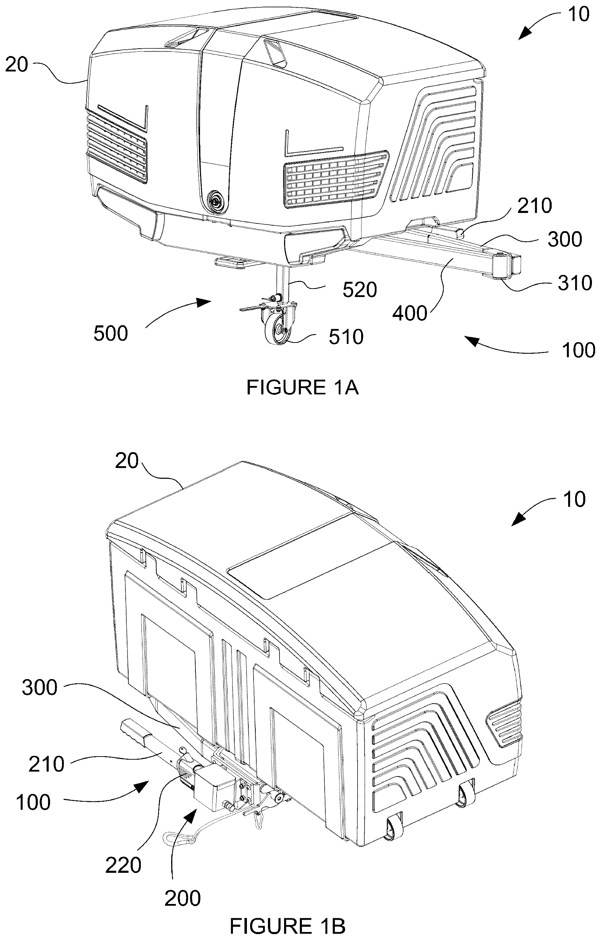

Figures 1A and 1B show load carrier assembly 10 according to an example of the present disclosure. The load carrier assembly 10 comprises a load carrier 20 for carrying a load and a support structure 100 connected to the load carrier 20. The load carrier 20 is thus supported by the support structure 100. The load carrier 20 of this example is a storage box. Luggage or camper equipment may be stored and transported within the storage box.

The support structure 100 comprises a coupling device 200 couplable with a tow bar of a towing vehicle. The coupling device of this example comprises a pair of jaws that may clamp a tow ball of the tow bar of the vehicle. The support structure may thus be clamped onto the tow ball by the pressure exerted by the pair of jaws. In other examples, the coupling device may be configured to be attached to a towing receiver hitch. The coupling device 200 of this example further comprises a lever 210 for clamping and unclamping the tow ball. The lever 210 may be grabbed by a user for pulling up and down the lever 210. In this example, the coupling device 200 may be connected to the tow ball by pushing the lever down and may be released from the tow ball by pulling it up. The coupling device 200 of this example further comprises a coupling device locking system 220 to lock the coupling device 200 onto the tow bar.

The coupling device 200 is rigidly connected to a fixed arm 300, e.g. via welding or a plurality of screws. The fixed arm 300 is pivotally connected to a movable arm 400. A hinge connection 310 pivotally connects the movable arm 400 relative to the fixed arm 300. In this example, the storage box is attached to the movable arm 400, e.g. screwed. The load carrier 20 may thus be moved away from the coupling device when the movable arm 400 pivots outwards.

The support structure 100 further comprises a wheel assembly 500 having a wheel 510 and wheel support 520. The wheel support 520 is pivotally connected to movable arm 400 to pivot the wheel support 520 about the movable arm 400. The wheel 510 is rotatably connected to the wheel support 520. The wheel 510 may thus rotate about the wheel support 520. The wheel 510 is a jockey wheel or an auxiliary wheel. The function of the wheel is to provide an additional support to the movable arm 400 when the movable arm 400 pivots about the fixed arm 300.

In this example, the wheel assembly 500 is at the supporting position as the wheel is positioned to rest and roll over the ground. Movement of the movable arm 400 relative to the fixed arm 300 is thus facilitated.

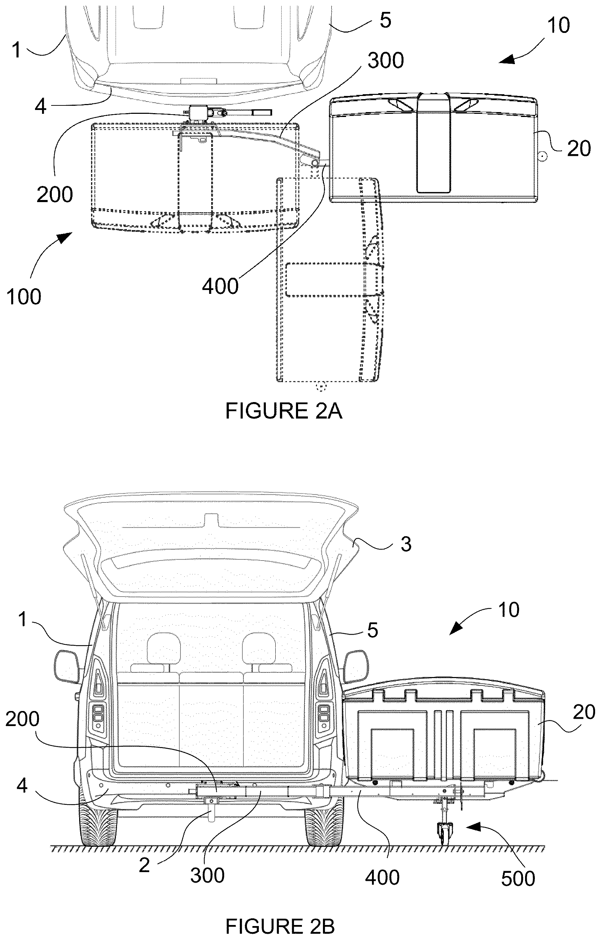

Figures 2A and 2B respectively show a top and a front view of a load carrier assembly 10 coupled with a tow bar of a towing vehicle according to an example of the present disclosure. The coupling device 200 of the load carrier assembly 10 is secured onto a tow bar 2 of a towing vehicle 1. The load carrier 20 is moved away from the tow bar 2 by the rotation of the movable arm 400 relative to the fixed arm 300. In the open position, the load carrier may reach an angle of 180° with the coupling device 200. The rear part 4 of the vehicle 1 can thus be accessed. Furthermore, the trunk lid 3 of the towing vehicle 1 can be opened.

As the wheel assembly is at the supporting position, the rotation of the movable arm 400 is facilitated. Furthermore, the wheel provides an additional support point to the movable arm to maintain the load carrier at the open position. The load carrier may be accessed from a lateral side 5 of the towing vehicle 1 when the movable arm has rotated 180°.

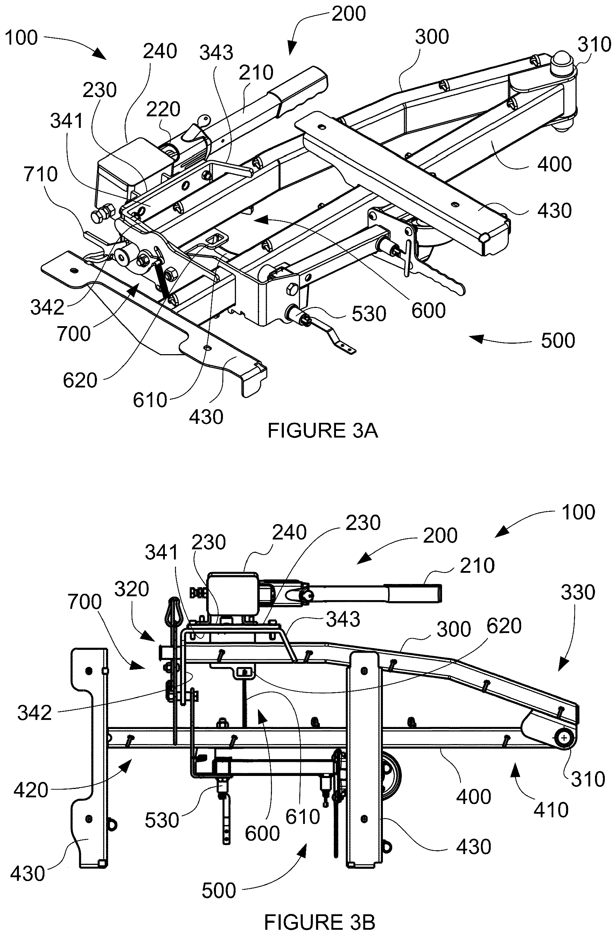

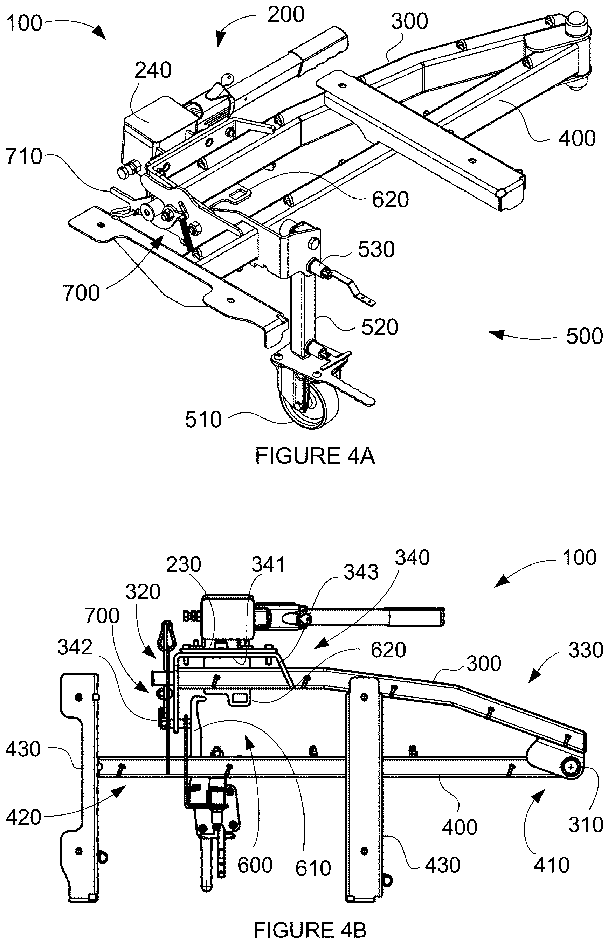

Figures 3A and 3B respectively show an isometric and a top view of a support structure 100 with the wheel assembly 500 in the hidden position according to an example of the present disclosure. Similarly, Figures 4A and 4B respectively show an isometric and a top view of the support structure 100 of Figures 3A and 3B with the wheel assembly 500 in the supporting position.

In these figures, the coupling device 200 comprises a jaw housing 240 to accommodate the clamping jaws movable by the action of the lever 210. The coupling device 200 further comprises a coupling plate 230 connected, e.g. welded, to one side of the jaw housing 240. The coupling plate 230 is connected to the side of the jaw housing 240 opposite to the rear part of the vehicle (when the coupling is coupled with the tow bar).

The fixed arm 300 extends from a left portion 320 to a right portion 330. The coupling device 200 is fixedly connected to the left portion 320 of the fixed arm 300. When coupled to the tow bar, the fixed arm 300 extends from a central position of the vehicle (where the tow bar is placed) to a lateral position of the vehicle.

The fixed arm 300 of these figures comprises a fixed arm bracket 340 attached to the coupling device 200. The fixed arm bracket 340 of these figures comprises a front plate 341, a right plate 343 and a left plate 342. The front plate 341 of this example is screwed to the coupling plate 230 of the coupling device 200. Furthermore, the left plate 342 and the right plate 343 are fixedly connected, e.g. welded, at the left portion 320 of the fixed arm 300. A rigid connection is thus established between the coupling device 200 and the fixed arm 300.

The hinge connection 310 of these figures pivotally connects the left portion 320 of the fixed arm 300 to a first end 410 of the movable arm 400. In this example, the fixed arm 300 comprises a bent shape, while the movable arm 400 extends straight between the first end 410 and the second end 420.

The right portion 330 of the fixed arm 300 is inclined relative to the left portion 320. The right portion 330 may form an angle between 175 and 160° relative to the left portion 320. The fixed arm 300 extends outwardly from the right portion to the left portion 320. The bent shape may allow for separating the movable arm 400 from the rear part of the vehicle. When the supporting structure is coupled with the tow bar, the right portion 330 is closer to the rear part of the towing vehicle than the left portion 320. This separation may allow the movable arm 400 to pivot 180° relative to the fixed arm 300 without interfering with the vehicle. Furthermore, larger load carriers may be used.

In these figures, the support structure 100 comprises a pair of supporting brackets 430 rigidly connected, e.g. welded, to the movable arm 400. The supporting brackets of this example extend substantially perpendicular to the movable arm 400. The load carrier may be attached and supported by the supporting brackets 430. In this example, one supporting bracket 430 is welded to the second end 420 of the movable arm 400 and the other supporting bracket 430 is welded to a central portion of the movable arm 400. In this way, the load carrier may be aligned with the longitudinal axis of the vehicle when travels.

In Figures 3A, 3B, 4A and 4B the movable arm 400 is in a closed position. However, it should be appreciated that the movable arm of this example can move towards an open position, e.g. rotating 180°. The support structure of this example further comprises a movable arm - fixed arm locking assembly 700 to lock the movable arm 400 at the closed position relative to the fixed arm 300. The movable arm - fixed arm locking assembly 700 may thus maintain the movable arm 400 at the closed position while the towing vehicle travels. The rotation of the movable arm 400 from the closed position is thus prevented by the movable arm - fixed arm locking assembly 700. The movable arm - fixed arm locking assembly 700 comprises a locking lever 710 configured to move between an engaging position to lock the movable arm 400 at the closed position and a disengaging position to unlock the movable arm 400 relative to the fixed arm 300. The locking lever 710 may be manually operated to allow the movable arm 400 to rotate.

In Figures 3A - 3B the wheel assembly 500 is at the hidden position, while in Figures 4A - 4B the wheel assembly 500 is at the supporting position. The wheel support 520 is substantially vertical when the wheel assembly 500 is at the supporting position (Figures 4A and 4B), whereas the wheel support is substantially horizontal at the hidden position (Figures 3A and 3B). The wheel support 520 is thus substantially perpendicular to the movable arm 400 at the supporting position and substantially parallel to the movable arm 400 at the hidden position. At the hidden position, the wheel assembly 500 is thus hidden to obtain a compact configuration of the load carrier assembly.

In these figures, the wheel assembly 500 comprises a wheel locking pin 530 to prevent the wheel support 520 from pivoting about the movable arm 400. The wheel locking pin 530 may retain the wheel assembly 500 at the hidden position and at the supporting position. A bearing may connect the wheel support to the movable arm. The wheel locking pin 530 may be inserted into a first hole associated with the movable arm 400 to retain the wheel assembly 500 at the supporting position (Figures 4A and 4B) and into a second hole associated with the movable arm 400 to retain the wheel assembly 500 at the hidden position (Figures 3A and 3B).

The wheel locking pin 530 may be manually operated to release the wheel locking pin 530 from the corresponding hole. A handle may be provided to be easily operated. When the wheel locking pin 530 is released, the bearing connecting the wheel support 520 to the movable arm 400 allows the rotation of the wheel support 520.

The support structure 100 of these examples further comprises a wheel assembly - fixed arm locking assembly 600 to lock the movable arm 400 at the closed position relative to the fixed arm 300 when the wheel assembly 500 is at the hidden position (Figures 3A and 3B). The wheel assembly - fixed arm locking assembly 600 prevents moving away the movable arm 400 from the fixed arm 300 while the wheel assembly is at the hidden position. Therefore, the movable arm 400 can only rotate away from the fixed arm 300 when the wheel assembly is at the supporting position (Figures 4A and 4B).

The wheel assembly - fixed arm locking assembly 600 of these figures comprises an engaging protrusion 610 protruding from the wheel assembly 500 to engage the fixed arm 400 when the wheel assembly 500 is at the hidden position. The engaging protrusion 610 of this example extends from the wheel support 520 from a proximal end to a distal end. The engaging protrusion 610 is substantially perpendicular to the wheel support 520. The distal end may engage a hole 620 formed at the fixed arm 300 to lock the movable arm 400 onto the fixed arm 300.

As the engaging protrusion 610 moves together with the wheel support 520, when the wheel support 520 rotates towards the supporting position, the engaging protrusion 610 also rotates. The rotation of the wheel support 520 causes the disengagement of the engaging protrusion from the fixed arm.

According to this example, the movable arm - fixed arm locking assembly 700 and the wheel assembly - fixed arm locking assembly 600 must be unlocked to allow the movable arm 400 to pivot from the closed position. The safety of the support structure may thus be increased.

In some examples, the support structure may comprise a warning system to indicate that the wheel assembly 500 is at the supporting position. This warning system may comprise a visual indicator and/or an acoustic indicator. The warning system may warn the user that the wheel 510 is contacting the ground. The user may then move the wheel assembly 500 to the hidden position to start and move the car. The warning system thus adds safety to the wheel assembly.

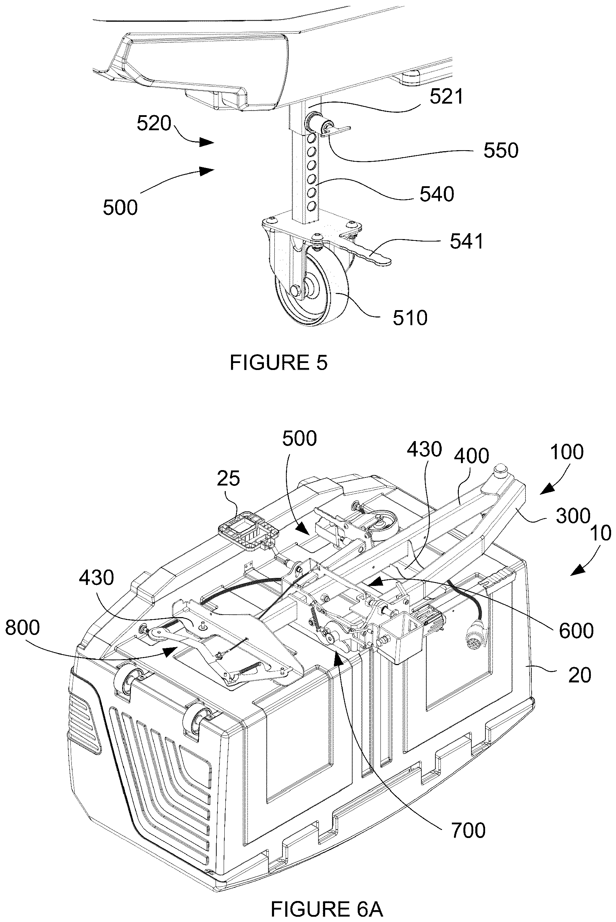

Figure 5 represents a wheel assembly 500 according to an example of the present disclosure. The wheel support 520 of this example is extendable. The height of the wheel 510 may thus be adjusted for different types of vehicles. One end of the wheel support is connected to the wheel 510 and the end is pivotally connected to the movable arm 400.

In this example, the wheel support 520 comprises a first wheel support bar 521 and a second wheel support bar 540. The first wheel support bar 521 is rotatably connected to the movable arm 400. The second wheel support bar 540 may slide in the first wheel support bar 521 to adjust the length of the wheel support 520. A bar locking pin 550 is configured to lock the second wheel support bar 540 onto the first wheel support bar 521 to adjust the length of the wheel support 520. The second wheel support bar comprises a plurality of holes to receive the bar locking pin 550. In other examples, any suitable adjusting mechanism may be employed.

In this example, the second wheel support bar 540 further comprises a handle to facilitate the rotation of the wheel assembly 500.

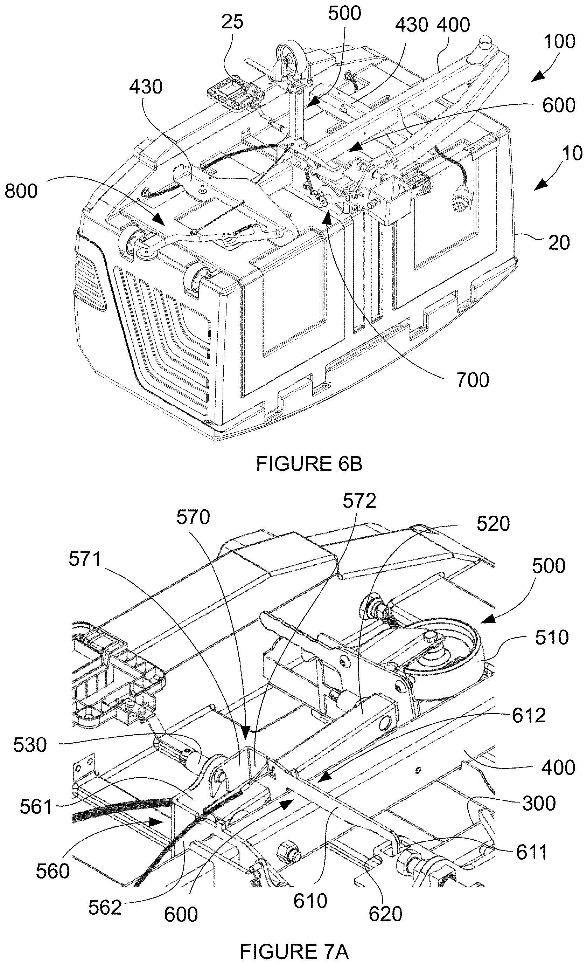

Figures 6A and 6B respectively show an isometric view, seen from below, of a load carrier assembly 10 with the wheel assembly at the hidden position and at the supporting position according to an example of the present disclosure.

The load carrier 20 is mounted on the movable arm 400. In this example, the load carrier is screwed to a pair of supporting brackets 430 welded to the movable arm 400. The load carrier 20 may thus be moved when the movable arm 400 rotates relative to the fixed arm 300.

The support structure 100 of this example further comprises a wheel assembly - fixed arm locking assembly 600. The wheel assembly - fixed arm locking assembly 600 prevents the movable arm 400 from swinging when the wheel assembly 500 is at the hidden position (Figure 6A) and allows the swinging of the movable arm 400 when the wheel assembly is at the supporting position (Figure 6B). The load carrier of this example comprises a load carrier handle 25 for triggering the movement of wheel assembly 500 between the hidden position and the supporting position.

The support structure 100 of figures 6A - 6B further comprises a warning system 800 to indicate that the wheel assembly 500 is at the supporting position. The warning system moves between a retracted position when the wheel support 520 is at the hidden position (Figure 6A) and a projecting position when the wheel support 520 is at the supporting position (Figure 6B). The movement of the wheel support 520 triggers the movement of the warning system from the retracted position (Figure 6A) to the projecting position (Figure 6B).

The support structure 100 of this example further comprises a movable arm - fixed arm locking assembly 700. The movable arm - fixed arm locking assembly 700 of this example provides an additional lock of the movable arm 400 relative to the fixed arm 300.

As depicted in Figures 7A - 7B, the wheel assembly 500 of this example comprises a first bracket 560 and a second bracket 570. The first bracket 560 is fixedly connected to the movable arm 400. In this example, the first bracket 560 is welded to the movable arm 400. The second bracket 570 is fixedly connected to the wheel support 520, e.g. to the end opposite to the wheel 510.

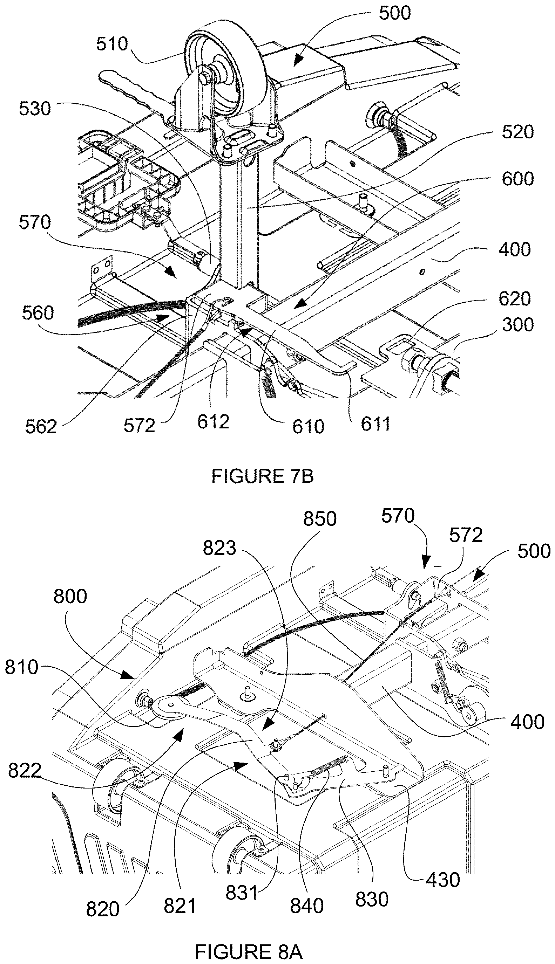

The second bracket 570 of this example is rotatably connected to the first bracket 560 to move the wheel assembly 500 between the supporting position (Figure 7B) and the hidden position (Figure 7A). The second bracket 570 may thus be moved together with the wheel support 520. A bracket bearing may rotatably connect the first bracket 560 to the second bracket 570.

The first bracket 560 of this example comprises a front wall 561 and a side wall 562. The second bracket 570 also comprises a front wall 571 and a side wall 572. The side walls 562, 572 are substantially perpendicular to the corresponding front walls 561, 571. The front walls 561, 571 are parallel. The side walls 562, 572 extend from the corresponding front walls 561, 571 towards the fixed arm 300.

The bracket bearing may connect the front walls 561,571. A wheel locking pin 530 may lock the second bracket 570 onto the first bracket 560. The wheel locking pin 530 may be moved between a locking and an unlocking position.

In the locking position, the wheel locking pin 530 locks the second bracket 570 onto the first bracket 560 to prevent the rotation of the second bracket 570 (and, consequently, of the wheel support 520) about the first bracket 560. However, the rotation of the second bracket 570 (and, consequently, of the wheel support 520) is allowed when the wheel locking pin 530 is in the unlocking position. A user may pull the wheel locking pin 530 to move the wheel locking pin 530 from a locking position to an unlocking position. A load carrier handle 25 is provided at the outer end of the wheel locking pin 530 to pull the wheel locking pin 530.

The wheel locking pin 530 may pass through holes formed at the front walls 561, 571 to lock the second bracket 570 onto the first bracket 560. In some examples, the second bracket 570 may comprise a first locking hole and a second locking hole to receive the wheel locking pin 530. These locking holes may be formed at the front wall 571. The wheel assembly 500 may be retained at the supporting position (Figure 7B) when the wheel locking pin 530 is inserted into the first locking hole, and at the hidden position (Figure 7A) when the wheel locking pin 530 is inserted into the second locking hole. The wheel support 520 may thus be blocked at the supporting position and at the hidden position. The supporting position and the hidden position may thus be securely reached.

Figures 7A and 7B also illustrate a wheel assembly - fixed arm locking assembly 600 to retain the movable arm 400 at the closed position when the wheel assembly 500 is at the hidden position. An engaging protrusion 610 protrudes from the wheel assembly 500 towards the fixed arm 300 to engage the fixed arm 300 when the wheel assembly 500 is at the hidden position (Figure 7A).

In this example, the engaging protrusion 610 extends between a proximal end 612 and a distal end 611. The engaging protrusion 610 of this example extends from the second bracket 570. In particular, the proximal end 612 extends from the side wall 572 of the second bracket 570.

The distal end 611 is configured to be inserted into a hole 620 arranged at the fixed arm 300 when the wheel assembly is at the hidden position. In this figure, the distal end 611 is curved to be inserted into the hole 620. This shape may act as a hook preventing an outwards rotation of the movable arm 400 relative to the fixed arm 300.

The rotation of the wheel support 520 from the hidden position (Figure 7A) towards the supporting position (Figure 7B) makes the engaging protrusion 610 disengage from the fixed arm 300. The rotation of the wheel support 520 causes the rotation of the second bracket 570 and, consequently, of the engaging protrusion 610. This movement causes the distal end 611 of the engaging protrusion to move out of the hole 620. The wheel assembly - fixed arm locking assembly 600 is thus unlocking the movable arm 400 when the wheel assembly 500 moves to the supporting position.

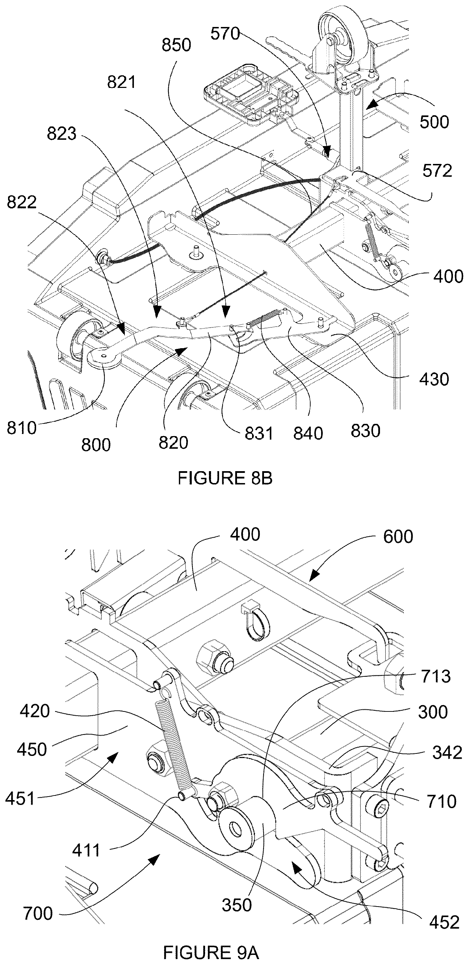

Figures 8A - 8B illustrate a zoomed-in view of a warning system 800 when the wheel assembly 500 is at the hidden position (Figure 8A) and at the supporting position (Figure 8B). The warning system 800 indicates that the wheel assembly 500 is at the supporting position. In this example, the warning system 800 comprises a visual indicator 810. The visual indicator 810 may be for example a light or a light reflector. The visual indicator 810 may project from the support structure 100 when the wheel assembly 500 is at the supporting position. When the load carrier assembly is mounted on the tow bar, the visual indicator 810 projects from the load carrier 20 when the wheel assembly 500 is at the supporting position, as depicted in Figure 8B. In Figure 8B, the visual indicator 810 projects out from a side of the load carrier 20. The visual indicator 810 may thus be easily seen by a user when the wheel assembly 500 is at the supporting position.

The visual indicator 810 of this example is configured to move between a retracted position (Figure 8A) when the wheel assembly 500 is at the hidden position and a projecting position (Figure 8B) when the wheel assembly 500 is at the supporting position. The movement of the wheel assembly 500 thus triggers the movement of the visual indicator 810.

In this example, the warning system 800 comprises a warning bar 820 extending between a proximal portion 821 and a distal portion 822. A central portion 823 is arranged between the proximal portion 821 and the distal portion 822. The visual indicator 810 is arranged at the distal portion 822.

In this example, a bolt 831 rotatably connects the proximal portion 821 to a warning plate 830 that is attached to one of the supporting brackets 430. The proximal portion 821 is thus rotatably connected to the movable arm 400. The warning system 800 further comprises a warning elastic member 840 having one end attached to the warning bar 820 and the other end to the movable end, in particular to the warning plate 830. The warning elastic member 840 is configured to exercise a force on warning bar 820 for moving the visual indicator 810 to the projecting position. The warning elastic member 840 may thus cause an outwards movement of the visual indicator 810.

This outwards force is counteracted by a linkage 850 connecting the warning bar 820 to wheel assembly 500 to prevent the movement of the visual indicator 810 towards the projecting position when the wheel assembly is at the hidden position. In this example, one end of the linkage 850 is connected to the warning bar 820 and the opposite end to the second bracket 570 of the wheel assembly 500, in particular to the side wall 572 of the second bracket 570. When the wheel assembly 500 is at the hidden position, the linkage 850 is tensioned and exerts a force against the outwards rotation of the warning bar 820. The force exerted by the warning elastic member 840 is thus counteracted by the linkage 850.

The movement of the wheel assembly 500 towards the supporting position implies the rotation of the second bracket 570, as illustrated in Figure 8B. The second bracket 570 thus moves towards the warning system 800. The distance between the second bracket 570 and the warning bar 820 thus decreases. The tension of the linkage 850, e.g. a linkage cable, is released. Therefore, the force exerted by the warning elastic member 840 against the warning bar 820 is higher than the opposite force exerted by the linkage 850. As a result, the warning bar 820 is allowed to rotate and move the visual indicator 810 to the projecting position (Figure 8B).

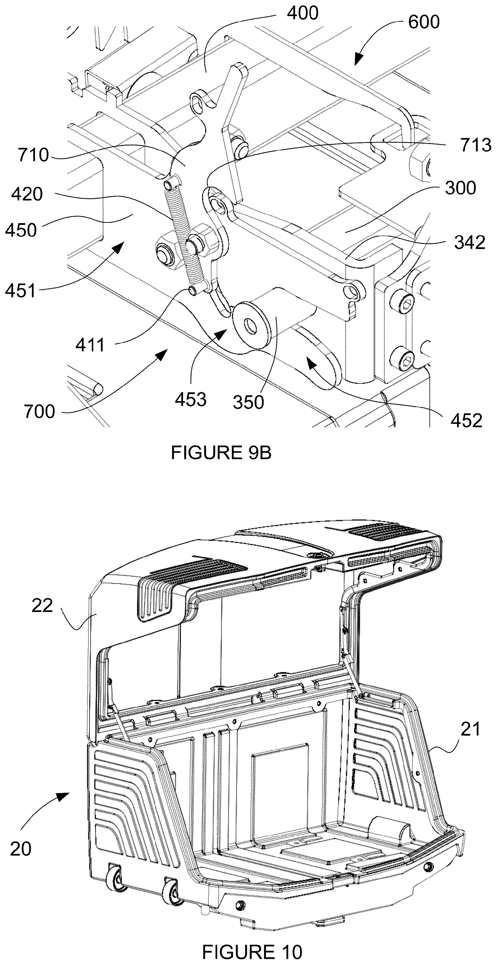

Figures 9A - 9B are respectively a zoomed-in views of the movable arm - fixed arm locking assembly 700 at the engaging position (Figure 9A) and the disengaging position (Figure 9B). The movable arm - fixed arm locking assembly 700 is configured to lock the movable arm 400 onto the fixed arm 300. The support structure of these figures thus comprises two different locking assemblies for preventing the movable arm 400 from swinging away: the wheel assembly - fixed arm locking assembly 600 and the movable arm - fixed arm locking assembly 700. In this example, both locking assemblies 600, 700 must be unlocked to allow the movable arm 400 to swing away from the fixed arm 300. This redundancy enhances the security of the system. Furthermore, this prevents the movable arm 400 from swinging away if the wheel 510 does not contact the ground. In other examples, the support structure may only comprise one of the locking assemblies.

The movable arm - fixed arm locking assembly 700 of this example comprises a locking lever 710. The locking lever 710 may be manually operated by a user to move between an engaging position (Figure 9A) for locking the movable arm 400 onto the fixed arm 300 and a disengaging position (Figure 9B) for unlocking the movable arm 400 from the fixed arm 300.

In these figures, the movable arm - fixed arm locking assembly 700 comprises a protrusion 350 protruding from the fixed arm 300. The protrusion 350 extends outwardly from the left plate 342 of the fixed arm bracket 340 rigidly attached to the fixed arm 300. The protrusion 350 extends perpendicular to the left plate 342. In this example, the protrusion 350 is cylindrical. In other examples, the protrusion may comprise other cross-sectional shapes.

A movable arm bracket 450 is attached to the movable arm 400, e.g. via welding. The movable arm bracket 450 extends substantially perpendicular to the movable arm 400. When the movable arm 400 is at the closed position, the movable arm bracket 450 is directed towards the fixed arm 300. The movable arm bracket 450 extends from a proximal end 451 attached to the movable arm 400 to a distal end 452. The movable arm bracket 450 of this example comprises a movable arm bracket receiver 453. The movable arm bracket receiver 453 is arranged at the distal end 452 of the movable arm bracket 450. The movable arm bracket receiver 453 is configured to partially surround the protrusion 350. The movable arm bracket receiver 453 of this example extends a portion of a circumference that may fit a portion of the external perimeter of the protrusion 350.

The locking lever 710 of these figures comprises a locking lever receiver 713 to partially surround the protrusion 350. The locking lever receiver 713 extends a portion of a circumference. The locking lever receiver 713 may fit a portion of the perimeter of the protrusion 350. The locking lever 710 is rotatably attached to the movable arm bracket 450 to move between the engaging position and the disengaging position.

The protrusion 350 is retained or clamped between the movable arm bracket receiver 453 and the locking lever receiver 713 when the locking lever is at the engaging position (Figure 9A). The movable arm bracket receiver 453 and the locking lever receiver 713 surround the perimeter of the protrusion 350. In some examples, the movable arm bracket receiver 453 and the locking lever receiver 713 surround at least 75% of the perimeter of the protrusion 350, e.g. the entire perimeter of the protrusion 350. The protrusion 350 may thus be clamped between the movable arm bracket receiver 453 and the locking lever receiver 713 when the locking lever 710 is at the engaging position.

The locking lever 710 may be moved to the disengaging position to release the protrusion 350 from the movable arm bracket receiver 453 and the locking lever receiver 713, as depicted in Figure 9A. The locking lever 710 may be manually rotated to move from the engaging position to the disengaging position.

In this figure, the locking lever 710 is rotatably connected to the movable arm bracket 450 through a bolt 411. The locking lever 710 may rotate about the bolt 411 to move between the engaging and the disengaging position. A lever elastic member 720 also connects the locking lever 710 to the movable arm bracket 450. The lever elastic member 720 comprises one end connected to the locking lever 710 and the opposite end connected to the movable arm bracket 450. The lever elastic member 720 may be a spring. The lever elastic member 720 may exercise a force against the locking lever 710 to prevent the rotation of the locking lever 710 about the movable arm bracket 450. This force is overcome by the user to cause the rotation of the locking lever 710. This may prevent an accidental disengagement of the locking lever 710 from the protrusion 350.

To enhance the security to prevent an accidental disengagement of the locking lever 710 from the protrusion 350, a hoop or carabiner may be provided to prevent the rotation of the locking lever 710 about the movable arm bracket 450.

In this example, moving away the movable arm 400 from a closed position comprises moving the wheel assembly to the supporting position to unlock the wheel assembly - fixed arm locking assembly 600, removing the carabiner and moving the locking lever 710 to disengage the protrusion 350. Then, the movable arm 400 may swing away from the fixed arm 300 while the wheel 510 rolls on the ground.

Figure 10 illustrates a load carrier according to an example of the present disclosure. The load carrier 20 may be mounted on a support structure according to any of the examples herein. The load carrier 20 of this example is a storage box. Luggage or camping equipment may be transported inside the storage box. The storage box comprises a body 21 and a lid 22 to close the body 21. A load may thus be arranged inside the storage box. The load may be protected from the weather conditions, such as rain, moisture and sunlight.

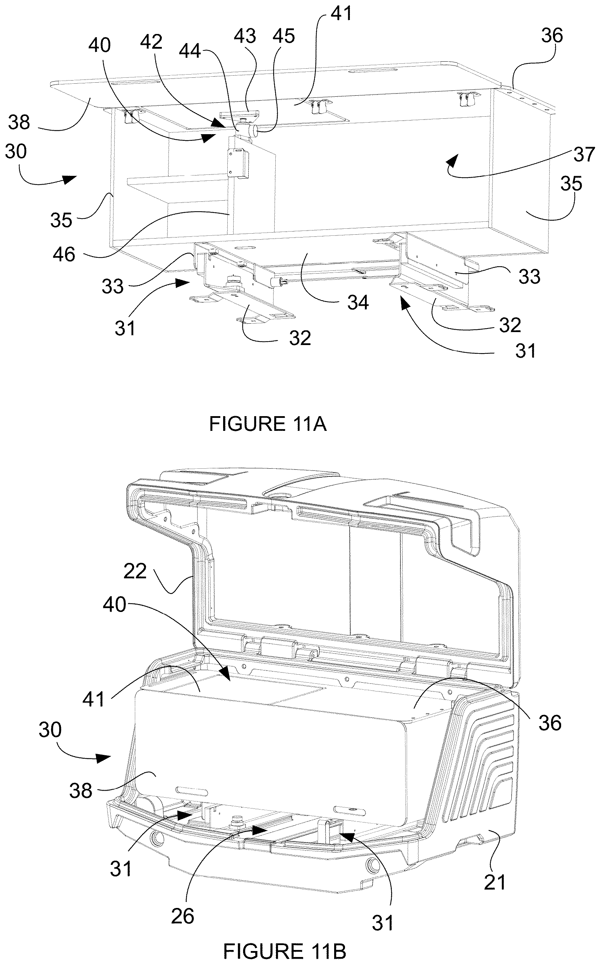

Figure 11A illustrates a camper equipment according to an example of the present disclosure and Figure 11B illustrates the camper equipment of Figure 11A arranged inside the load carrier of Figure 10.

The storage box of Figure 11B comprises a camper equipment 30, e.g. a cupboard. The camper equipment 30 may thus travel inside the storage box with the towing vehicle. When the towing vehicle is parked, the movable arm may move the storage box away from the tow bar, so that the camper equipment 30 may be used without disturbing the opening of the trunk lid. The camper equipment of this example comprises a pair of rail assemblies attached to a base 26 of the body 21 of the storage box. The rail assemblies 31 are configured to take the camper equipment out of the storage box. Each of the rail assemblies 31 comprises a fixed profile 32 configured to be attached to the base 26 of the body 21 and a slidable profile 33 connected to the camper equipment 30. The fixed profile 32 may be releasable attached to the base 26 to increase the adaptability of the storage box. In this example, the slidable profile 33 is attached to the bottom wall 34 of the camper equipment 30. The slidable profile 33 is configured to slide about the fixed profile 32. The camper equipment 30 may thus be slidably moved relative to the storage box. The camper equipment may thus be used under a lateral cover of the towing vehicle.

The camper equipment 30 of this example comprises a pair of side walls 35 extending from the bottom wall 34 to a top wall 36. A back wall 37 is arranged between the side walls 35. The camper equipment is closed by a pivotable front wall 38. The pivotable front wall 38 may be arranged vertically to close the camper equipment and horizontally to extend from the top wall 36.

In this example, the camper equipment 30 comprises a cooking device 40.

Consequently, users may cook while the storage box is secured on the tow bar. The movable arm may be positioned at 180° to position the cooking device 40 away from the car. Then, the camper equipment 30 may be guided by the rail assemblies 31 to be extracted from the storage. The cooking device 40 may then be protected under a lateral cover of the towing vehicle.

The cooking device 40 comprises a kitchen stove 41 and an adjusting system 42 to adjust the flatness of the kitchen stove 41. Irregularities and inclinations of the ground may thus compensate to facilitate cooking. The kitchen stove 41 may be mounted on the adjusting system 42.

The adjusting system 42 of this example comprises a plate 43 attached to the kitchen stove 41. The plate 43 is connected to a ball arranged inside a housing 44. The housing is supported by an internal structure 46 of the camper equipment, e.g. an internal wall. The rotation of the ball within the housing 44 may cause the inclination of the plate 43, and consequently of the kitchen stove 41. A pressing element 45 may be used to retain the ball at a specific position when the kitchen stove 41 has reached a desired inclination. A flatness indicator may be arranged on an upper surface of the kitchen stove 41 to indicate the flatness of the kitchen stove 41. The ball within the housing 44 may be rotated until the flatness indicator indicates the kitchen stove has reached the desired position. Then, the pressing element 45 may be screwed to the housing 44 to press and retain the ball inside the housing 44. Unscrewing the pressing element 45 may allow the rotation of the ball inside the housing to reach the desired flatness of the kitchen stove 41.

For reasons of completeness, various aspects of the present disclosure are set out in the following numbered clauses:
Clause 1: A support structure (100) for a load carrier (20) of a towing vehicle (1), the support structure (100) comprising:
   a coupling device (200) couplable with a tow bar (2) of the towing vehicle (1);
   a fixed arm (300) fixedly connected to the coupling device (200);
   a movable arm (400) pivotably connected to the fixed arm (300); wherein the movable arm (400) is configured to support the load carrier (20) to pivotably move the load carrier (20) relative to the fixed arm (300);
   a wheel assembly (500) comprising:
      a wheel support (520) pivotally connected to the movable arm (400) to pivot the wheel support (520) about to the movable arm (400);
      a wheel (510) rotatably connected to the wheel support (520);
   wherein the wheel assembly (500) is configured to pivot between:
      a supporting position to rest the wheel (510) on the ground; and
      a hidden position to prevent the wheel (510) from contacting the ground.
Clause 2: The support structure (100) according to any clause 1, wherein the wheel support (520) is extendable.
Clause 3: The support structure (100) according to any of clauses 1-2, wherein the wheel support (520) comprises a first wheel support bar (521) connected to the movable arm (400) and a second wheel support bar (540) rotatably connected to the wheel (510); wherein the second wheel support bar (540) is configured to slide in the first wheel support bar (521) to adjust a length of the wheel support (520).
Clause 4: The support structure (100) according to clause 3, wherein the wheel support (520) comprises a bar locking pin (550) to lock the second wheel support bar (540) onto the first wheel support bar (521).
Clause 5: The support structure (100) according to any of clauses 1-4, wherein the wheel assembly (500) comprises a wheel locking pin (530) to prevent the wheel support (520) from pivoting about the movable arm (400).
Clause 6: The support structure (100) according to clause 5, wherein the wheel assembly (500) comprises:
   a first bracket (560) fixedly connected to the movable arm (400); and
   a second bracket (570) fixedly connected to the wheel support (520), wherein the second bracket (570) is rotatably connected to the first bracket (560) to move the wheel assembly (500) between the supporting position and the hidden position;
   wherein the wheel locking pin (530) is configured to move between:
      a locking position to lock the second bracket (570) onto the first bracket (560) to prevent the rotation of the second bracket (570) relative to the first bracket (560); and
      unlocking position to allow the rotation of the second bracket (570) relative to the first bracket (560).
Clause 7: The support structure (100) according to clause 6, wherein the second bracket (570) comprises a first locking hole and a second locking hole to receive the wheel locking pin (530); wherein the wheel locking pin (530) is configured to be inserted into the first locking hole when the wheel assembly (500) is in the supporting position and into the second locking hole when the wheel assembly (500) is in the hidden position.
Clause 8: The support structure (100) according to any of clauses 1 - 7, wherein the movable arm (400) is configured to pivotally move relative to the fixed arm (300) between a closed position and an open position.
Clause 9: The support structure (100) according to clause 8, wherein the movable arm (400) is configured to rotate 180° between the closed position and the open position.
Clause 10: The support structure (100) according to any of clauses 8 - 9, wherein the support structure (100) comprises a wheel assembly - fixed arm locking assembly (600) to lock the movable arm (400) at the closed position relative to the fixed arm (300) when the wheel assembly (500) is at the hidden position.
Clause 11: The support structure (100) according to clause 10, wherein the wheel assembly - fixed arm locking assembly (600) comprises an engaging protrusion (610) protruding from the wheel assembly (500) to engage the fixed arm (300) when the wheel assembly (500) is at the hidden position.
Clause 12: The support structure (100) according to clause 11, wherein the engaging protrusion (610) comprises a distal end (611) to engage the fixed arm (300), optionally the distal end (611) is curved.
Clause 13: The support structure (100) according to any of clauses 11 - 12, wherein the engaging protrusion (610) comprises a proximal end (612) extending from the second bracket (570) according to any of clauses 6 - 7.
Clause 14: The support structure (100) according to clause 13, wherein the distal end (611) is configured to be inserted into a hole (620) of the fixed arm (300) to lock the movable arm (400) at the closed position.
Clause 15: The support structure (100) according to any of clauses 8 - 14, wherein the support structure (100) comprises a movable arm - fixed arm locking assembly (700) to lock the movable arm (400) at the closed position relative to the fixed arm (300).
Clause 16: The support structure (100) according to clause 15, wherein the movable arm - fixed arm locking assembly (700) comprises a locking lever (710) configured to move between an engaging position to lock the movable arm (400) at the closed position and a disengaging position to unlock the movable arm (400) relative to the fixed arm (300).
Clause 17: The support structure (100) according to clause 16, wherein movable arm - fixed arm locking assembly (700) comprises:
   a protrusion (350) protruding from the fixed arm (300);
   a movable arm bracket (450) attached to the movable arm (400), the movable arm bracket (450) comprising a movable arm bracket receiver (453) to partially surround the protrusion (350); and
   wherein the locking lever (710) is rotatably attached to the movable arm bracket (450) to move between the engaging position and the disengaging position, wherein the locking lever (710) comprises a locking lever receiver (713) to partially surround the protrusion (350); and
   wherein the protrusion (350) is retained between the movable arm bracket receiver (453) and the locking lever receiver (713) when the locking lever (710) is at the engaging position, and wherein the protrusion (350) is released from the movable arm bracket receiver (453) and the locking lever receiver (713) when the locking lever (710) is at the disengaging position.
Clause 18: The support structure (100) according to clause 17, wherein movable arm - fixed arm locking assembly (700) comprises a lever elastic member (720) connecting the locking lever (710) to the movable arm bracket (450).
Clause 19: The support structure (100) according to any of clauses 1 - 18, further comprising a warning system (800) to indicate that the wheel assembly (500) is at the supporting position.
Clause 20: The support structure (100) according to clause 19, wherein the warning system (800) comprises a visual indicator (810) that projects from the support structure (100) when the wheel assembly (500) is at the supporting position.
Clause 21: The support structure (100) according to clause 20, wherein the visual indicator (810) is configured to move between a retracted position when the wheel assembly (500) is at the hidden position and a projecting position when the wheel assembly (500) is at the supporting position.
Clause 22: The support structure (100) according to clause 21, wherein the warning system (800) comprises a warning bar (820) extending from a proximal portion (821) to a distal portion (822), and wherein the visual indicator (810) is arranged at the distal portion (822).
Clause 23: The support structure (100) according to clause 22, wherein the proximal portion (821) is rotatably connected to the movable arm (400).
Clause 24: The support structure (100) according to clause 23, wherein the warning system (800) comprises:
   a warning elastic member (840) having one end attached to the warning bar (820) and the other end to the movable arm (400) to exercise a force on the warning bar (820) for moving the visual indicator (810) to the projecting position; and
   a linkage (850) connecting the warning bar (820) to the wheel assembly (500) to prevent the movement of the visual indicator (810) towards the projecting position when the wheel assembly (500) is at the hidden position.
Clause 25: The support structure (100) according to clause 24, wherein the linkage (850) is connected to the second bracket (570) of clauses 6 - 7.
Clause 26: The support structure (100) according to any of clauses 1 - 25, wherein the coupling device (200) comprises a pair of clamping jaws to engage a tow ball of the tow bar (2) of the towing vehicle (1).
Clause 27: The support structure (100) according to any of clauses 1 - 26, further comprising a pair of supporting brackets (430) to be attached to the load carrier (20).
Clause 28: The support structure (100) according to clause 27, wherein the pair of supporting brackets (430) extends substantially perpendicular to the movable arm (400).
Clause 29: A load carrier assembly (10) for a towing vehicle (1) comprising:
   a load carrier (20) for carrying a load; and
   a support structure (100) according to any of clauses 1-28 connected to the load carrier (20).
Clause 30: The load carrier assembly (10) according to clause 29, wherein the load carrier (20) is attached to the movable arm (400).
Clause 31: The load carrier assembly (10) according to any of clauses 29-30, wherein the load carrier (20) is a storage box.
Clause 32: The load carrier assembly (10) according to clause 31, wherein the storage box comprises a body (21) and a lid (22) to close the body (21).
Clause 33: The load carrier assembly (10) according to any of clauses 31 - 32, wherein the storage box comprises a camper equipment (30) and a pair of rail assemblies (31) connected to the camper equipment (30) for taking the camper equipment out of the storage box.
Clause 34: The load carrier assembly (10) according to clause 33, wherein the camper equipment (30) comprises a cooking device (40).
Clause 35: The load carrier assembly (10) according to clause 34, wherein the cooking device (40) comprises a kitchen stove (41) and an adjusting system (42) to adjust the flatness of the kitchen stove (41).

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A support structure (100) for a load carrier (20) of a towing vehicle (1), the support structure (100) comprising:
a coupling device (200) couplable with a tow bar (2) of the towing vehicle (1);
a fixed arm (300) fixedly connected to the coupling device (200);
a movable arm (400) pivotably connected to the fixed arm (300); wherein the movable arm (400) is configured to support the load carrier (20) to pivotably move the load carrier (20) relative to the fixed arm (300);
a wheel assembly (500) comprising:
a wheel support (520) pivotally connected to the movable arm (400) to pivot the wheel support (520) about to the movable arm (400);
a wheel (510) rotatably connected to the wheel support (520);
wherein the wheel assembly (500) is configured to pivot between:
a supporting position to rest the wheel (510) on the ground; and
a hidden position to prevent the wheel (510) from contacting the ground.

2. The support structure (100) according to any claim 1, wherein the wheel support (520) is extendable.

3. The support structure (100) according to any of claims 1-2, wherein the wheel support (520) comprises a first wheel support bar (521) connected to the movable arm (400) and a second wheel support bar (540) rotatably connected to the wheel (510); wherein the second wheel support bar (540) is configured to slide in the first wheel support bar (521) to adjust a length of the wheel support (520).

4. The support structure (100) according to any of claims 1-3, wherein the wheel assembly (500) comprises a wheel locking pin (530) to prevent the wheel support (520) from pivoting about the movable arm (400).

5. The support structure (100) according to claim 4, wherein the wheel assembly (500) comprises:
a first bracket (560) fixedly connected to the movable arm (400); and
a second bracket (570) fixedly connected to the wheel support (520), wherein the second bracket (570) is rotatably connected to the first bracket (560) to move the wheel assembly (500) between the supporting position and the hidden position;
wherein the wheel locking pin (530) is configured to move between:
a locking position to lock the second bracket (570) onto the first bracket (560) to prevent the rotation of the second bracket (570) relative to the first bracket (560); and
unlocking position to allow the rotation of the second bracket (570) relative to the first bracket (560).

6. The support structure (100) according to claim 5, wherein the second bracket (570) comprises a first locking hole and a second locking hole to receive the wheel locking pin (530); wherein the wheel locking pin (530) is configured to be inserted into the first locking hole when the wheel assembly (500) is in the supporting position and into the second locking hole when the wheel assembly (500) is in the hidden position.

7. The support structure (100) according to any of claims 1 - 6, wherein the movable arm (400) is configured to pivotally move relative to the fixed arm (300) between a closed position and an open position.

8. The support structure (100) according to claim 7, wherein the movable arm (400) is configured to rotate 180° between the closed position and the open position.

9. The support structure (100) according to any of claims 7-8, wherein the support structure (100) comprises a wheel assembly - fixed arm locking assembly (600) to lock the movable arm (400) at the closed position relative to the fixed arm (300) when the wheel assembly (500) is at the hidden position.

10. The support structure (100) according to claim 9, wherein the wheel assembly - fixed arm locking assembly (600) comprises an engaging protrusion (610) protruding from the wheel assembly (500) to engage the fixed arm (300) when the wheel assembly (500) is at the hidden position.

11. The support structure (100) according to any of claims 7 - 10, wherein the support structure (100) comprises a movable arm - fixed arm locking assembly (700) to lock the movable arm (400) at the closed position relative to the fixed arm (300).

12. The support structure (100) according to any of claims 1 - 11, further comprising a warning system (800) to indicate that the wheel assembly (500) is at the supporting position.

13. A load carrier assembly (10) for a towing vehicle (1) comprising:
a load carrier (20) for carrying a load; and
a support structure (100) according to any of claims 1-12 connected to the load carrier (20).

14. The load carrier assembly (10) according to claim 13, wherein the load carrier (20) is attached to the movable arm (400).

15. The load carrier assembly (10) according to any of claims 13 - 14, wherein the load carrier (20) is a storage box.
